# EUROPEAN PATENT SPECIFICATION

(11) **EP 4 433 238 B1**
(45) Date of publication and mention of the grant of the patent: **09.09.2026**
(21) Application number: 22818310.9
(22) Date of filing: 16.11.2022
(51) Int. Cl.: B21D 26/021, B21D 26/059, B29C 51/00, B32B 3/26, B32B 3/30, B32B 9/00, B32B 9/04, B32B 21/08, B32B 15/08, B32B 21/14, B32B 15/20, B29C 51/10

(54) **METHOD FOR MOLD-FREE PRODUCTION OF A RELIEFED COMPONENT AND RELIEFED COMPONENT**
VERFAHREN ZUR FORMFREIEN HERSTELLUNG EINES RELIEFBAUTEILS UND RELIEFBAUTEIL
PROCÉDÉ DE PRODUCTION SANS MOULE D'UN COMPOSANT À RELIEF ET COMPOSANT À RELIEF

(30) Priority: 18.11.2021 DE 102021213010
(43) Date of publication of application: 25.09.2024
(73) Proprietor: IPU INGENIEURGESELLSCHAFT BRAUNSCHWEIG MBH, 38112 Braunschweig (DE)
(72) Inventor: RZEPECKI, Michael Philipp, 76137 Karlsruhe (DE)
(74) Representative: von Hirschhausen, Helge
(86) International application number: PCT/EP2022/082072
(87) International publication number: WO 2023/088935

(56) References cited:
- EP-A1- 0 694 352
- EP-A1- 2 110 189
- WO-A1-2019/166691
- WO-A1-2020/094486
- US-A1- 2011 297 734

## Description

The present invention relates to a process for the mold-free production of a reliefed component and to a reliefed component produced by means of this process.

In this context, the term "mold-free" is to be understood in such a way that no specifically designed molds are required for the production or forming of the respective component. The term "relief" is also to be understood as meaning that the component formed in each case has a specific structural three-dimensional formation on at least one of its outer surfaces. Such structural three-dimensional formations can be both concave and convex and include both projections and indentations of the most varied designs.

Known three-dimensionally structured components can for example be manufactured by locally welding or gluing together sheets of metal, thereby creating cavities, which can then be inflated by introducing a fluid with pressure to said cavities. Manufacturing methods for such three-dimensionally structured components are disclosed for example in EP 2 110 189 A1 and EP 0 694 352 A1.

Spatial folded structures are a special example of three-dimensionally structured components. Spatial folded structures are characterized in particular by the fact that their three-dimensional shapes are crisscrossed by straight interconnected folding or crease lines. These folding or crease lines geometrically separate the individual, flat and interconnected partial surfaces from each other by crease lines and thus lead to the formation of a three-dimensional supporting structure.

A known process for the production of such spatial folded structures without forming tools is described, for example, in WO 2020 / 094 486 A1 and its priority document DE 10 2018 218 842 A1. In accordance with the process described there, patterned predetermined bending points are introduced into a semi-finished product in order to concentrate the forming on narrow, line-like areas. Fluid pressure is then applied to the semi-finished product in such a way that plastic permanent forming of the semi-finished product takes place along the previously formed predetermined bending points, thus forming the desired spatially structured surface of the spatial folding unit.

The linear recesses introduced serve to define the respective folding or crease lines of the spatial folding unit finally formed. The recesses are formed as narrowly as possible so as not to weaken the overall structure of the resulting spatial folding unit too much by excessive material removal and to create defined crease lines and plastic deformations concentrated in the crease lines.

Spatial folding units have a high structural stiffness, but a very uneven appearance due to the many folding or crease lines and flat surfaces. It is also technically very complex and time-consuming to introduce the large number of line-shaped recesses to be provided in the semi-finished product.

In light of this, it is a task of the present invention to provide a method for the mold-free production of a reliefed component which, on the one hand, has a high structural stability and, on the other hand, has a smoother appearance. Furthermore, it is a task of the present invention to provide a method for the mold-free production of a reliefed component which is less complex and time-consuming than the known method described above.

This task is solved by the method according to the enclosed main claim 1. Advantageous further embodiments of this method are to be taken from the dependent claims. Furthermore, the present invention also relates to a reliefed component produced by means of this method.

According to the present invention, in a method for the mold-free production of a reliefed component, at least one areal recess is first introduced into a flat semi-finished product. Fluid pressure is then applied to the semi-finished product transversely to its plane of extension in such a way that the semi-finished product is permanently deformed mold-free in the region of at least one areal recess and forms at least one curved surface structure. Due to the significantly reduced bending load-bearing capacity in the area of the areal recess, permanent deformation of the semi-finished product occurs.

Deformations in the form of curved surface structures, which can also be referred to as thin-walled pan structures. The curved surface structures are obtained by plastic deformation of the areas of the semi-finished product which are aligned transversely to the plane of extension of the semi-finished product with the areal recesses. In other words, the thinner areas of the semi-finished product obtained by the recesses introduced, which, viewed in cross-section, lie above and/or below the areal recess(es) formed, are transformed into spatially curved surface structures so that thin-walled pan structures are produced.

The load is applied with the aid of at least one fluid, such as water, oil and/or air. The pressure can be distributed areal and/or applied in concentrated form at specific points. Thus, targeted fluid concentrations are conceivable, e.g. by using pressure nozzles, such as those found in water hoses, high-pressure cleaners or fire hoses. Pressure can be applied slowly or quickly. For example, a targeted blast can be used to apply pressure explosively. However, slow pressure application over significantly longer periods of time is also quite possible.

The term "areal" means here that the recess formed defines a continuous area in the plane of extension of the flat semi-finished product, which has a considerable extension in both directions of the plane of extension. In particular, narrow linear recesses or areas or patterns composed of such are not to be understood as areal recesses within the meaning of the present invention. The core of the present invention thus lies in completely departing from the previous approach. Conventionally, the recesses to be provided were distributed over the semi-finished product in the form of folding or crease lines in a net-like manner and were kept as narrow as possible in each case, in order not to weaken the overall structure of the formed component too much by excessive material removal and still to be able to form a stable spatial folded structure. In contrast to this, the present invention now teaches areal and thus comparatively large recesses to be provided in the semi-finished product. Such areal recesses lead to the fact that no folded structure is formed, but locally by undeformed flat areas delimited single or double curved surface structures, which form pans. Although considerably more material is removed to form the recesses according to the invention, the spatially curved surface structures formed in this way exhibit very high stability due to the membrane effect. The curved surface structures obtained also have a completely different, in particular significantly "softer" or "calmer", appearance than folded structures.

In order to form particularly stable components, it has proved advantageous if at least one surface structure is formed which is not only single-curved but double-curved and, in particular, forms a locally limited pan within the reliefed component.

In principle, the semi-finished product can consist of a single material. It then has a homogeneous material composition. The term "material", as used here, includes not only a wide variety of materials and material compositions, but also a wide variety of manufacturing processes, treatments and intrinsic designs of corresponding materials, which have an influence on the physical and/or chemical behavior. In the sense of this, the term "material" essentially encompasses all aspects that determine the physical and/or chemical properties of the respective material composition that are classified as relevant in each case. Consequently, solid rock can be a material different from stone powder in the same way that aluminum is a material different from wood. The use of a semi-finished product formed from a single material makes it considerably easier to predict the behavior of the semi-finished product during the forming process and to influence it accordingly.

Preferably, the semi-finished product is a composite component with at least two areas of different materials, in particular of the same or different types. It then has a heterogeneous material composition. Such designs allow a particularly flexible selection of the properties of the semi-finished product. The terms "of the same kind" and "of a different kind" do not necessarily refer to the respective material itself, but are to be understood in the light of the physical and/or chemical properties of the respective materials which are classified as relevant in each case. In this sense, for example, in one case in which it is essentially the type of material that is important, aluminum and lead can be "of the same type", while in another case in which it is essentially the density that is important, aluminum and lead can be "of different types". Which combination of materials is to be preferred ultimately depends on the respective boundary conditions and/or target specifications.

If a composite component is to be used as a semi-finished product, it is particularly advantageous if the semi-finished product has at least two layers of material, in particular of the same or a different type, aligned parallel to one another in the plane in which the semi-finished product extends. Such configurations are particularly easy to obtain and nevertheless permit considerable flexibility in the selection of the properties of the semi-finished product. For example, the semi-finished product comprises one or more intermediate layers which are surrounded by two cover layers. The materials of the two cover layers can be identical to each other or different from each other. It is also possible to cover the surfaces of the semi-finished product with a thin protective film to protect them from damage, such as scratches in particular. This is particularly advantageous for metallic semi-finished products or cover layers. In particular, composite panels in sandwich construction with two metallic cover layers, such as Alucobond, Dibond, Alpolic, etc., are excellently suited for relief forming according to the invention.

In such a multilayer design, at least one areal recess is advantageously introduced into at least one of the layers of the semi-finished product, while no recess is introduced into at least one other of the layers of the semi-finished product. Thus, the semi-finished product retains at least one layer which ensures the structural integrity of the semi-finished product throughout. Regularly, this layer without recesses then also serves to form the curved surface structure(s) during the forming process.

Advantageously, at least one areal recess is made only on a top side or on a bottom side of the semi-finished product. In other words, the flat semi-finished product is provided with at least one corresponding recess either on its top side or on its bottom side by removing material. Such a formation of recesses is particularly simple, resulting in a particularly simple and inexpensive production. Alternatively or supplementarily, at least one recess can be formed inside the semi-finished product. This considerably increases flexibility in the selection of accessible shapes for the finally formed reliefed component. In particular, such internal recesses allow the formation of components which are provided with correspondingly curved surface structures both on their top side and on their bottom side.

Preferably, the semi-finished product has at least one flat cover layer or cover surface which is deformed by the application of pressure to form the curved surface structure. The shape of the component finally obtained can thus be predicted and influenced particularly well.

In particular, the semi-finished product can have a corresponding cover layer or cover surface both on its top side and on its bottom side, which are then deformed by the application of pressure to form the surface structure(s). This considerably increases flexibility in the design of the reliefed component finally formed.

Preferably, the semi-finished product consists at least in part of plasticizable metal, thermoplastic, plasticizable plastic and/or wood, stone or wood-based material veneers. Corresponding materials have been identified as being particularly suitable for use in the manufacturing process according to the invention.

Preferably, the semi-finished product is provided with a membrane or foil at least locally, preferably completely, before pressurization. Such a membrane or foil makes it possible to ensure the pressure differences necessary for deformation of the semi-finished product in the different areas of the semi-finished product. This applies in particular if the semi-finished product contains at least one opening. This can then be closed by the membrane or foil.

Preferably, the areal recesses provided in the flat semi-finished product are formed with a depth which lies in a range from 10% to 99.9% of the thickness of the semi-finished product. The depth of the recesses is to be defined rectangular to the plane of extension of the semi-finished product. Appropriate depths ensure that sufficiently strong structural weakenings are obtained for forming, while the overall structure of the semi-finished product is not weakened too much.

Preferably, at least one areal recess is formed with a depth such that the semi-finished product has a cross-sectional thickness of at least 0.1 mm to 10 mm at its thinnest point. In stainless steel, for example, a minimum thickness of 0.1 mm is sufficient. Such minimum thicknesses result in sufficient residual stability of the semi-finished product and of the reliefed component finally formed.

Preferably, different areal recesses provided in the flat semi-finished product are formed with different depths and/or individual areal recesses are formed with a varying depth. Variable depths of the recesses increase the variety of shapes to be obtained for the reliefed component.

Preferably, at least one recess, in particular all areal recesses, are formed by milling, sawing, cutting, punching, drilling, drill milling, carving, eroding and/or denting, either manually or mechanically.

Preferably, before fluid pressure is applied, two separate semi-finished products are placed on top one another and at least the edges of the two separate semi-finished products are joined together in a fluid-tight or air-tight manner to form a combined semi-finished product. Such a connection can be made both via internal fixing and sealing means and via external fixing and sealing means. Thus, it is possible to join two separate semi-finished products for the forming process to form a combined semi-finished product, effectively forming two separate semi-finished products into reliefed components in a single forming process. After the forming process is completed, the resulting combined reliefed component can then be separated into two separate reliefed components by releasing the fluid-tight or air-tight connection. This not only saves time, but also costs in the production of several separate reliefed components.

It is also possible to position at least one intermediate layer, in particular in the form of a thin sheet, between the two separate semi-finished products and to join it airtight to the two separate semi-finished products at least at the edges. This also makes it possible to combine separate semi-finished products, which could not be meaningfully combined without a corresponding middle or intermediate layer, and to form them in a single forming process.

Preferably, the semi-finished product is positioned on a flat counterpressure plate before being subjected to fluid pressure and, in particular, is connected to the counterpressure plate in an airtight manner at least at the edges of the semi-finished product for the forming process. Such a flat counterpressure plate enables more precise control of the forming process. The counterpressure plate serves merely to support the semi-finished product during the forming process and thus to prevent undesirable deformation of the semi-finished product. The counterpressure plate, however, does not serve as a mold or die in the conventional sense.

It is also conceivable that the semi-finished product is deformed by lowering it into a body of water by means of the depth-dependent water pressure. In principle, any conceivable natural or man-made body of water can be used. For example, it can be an open body of water such as a lake, a river, the sea or an artificially created water pit. With the use of a previously existing body of water, there is no need to provide a special device intended for pressurization and thus for deformation. Only the natural water pressure is used for deformation. This leads, among other things, to a very favorable manufacturing process.

The present invention also relates to a reliefed component produced by one of the methods described above. A corresponding component can be produced particularly inexpensively and at the same time very flexibly in terms of its shape, while the selected forming method is particularly gentle on the materials used and the reliefed component nevertheless exhibits very high structural stability.

In the following, the present invention is explained in more detail with reference to the figures. Therein schematically show:
- Fig. 1A: An image of a region of a reliefed component formed according to the invention, corresponding to a first embodiment;
- Fig. 1B: An image of a region of a reliefed component formed according to the invention, according to a second embodiment;
- Fig. 1C: An image of an area of a reliefed component formed according to the invention, according to a third embodiment;
- Fig. 1D: An image of an area of a reliefed component formed according to the invention, corresponding to a fourth embodiment;
- Fig. 1E: An image of an area of a reliefed component formed according to the invention, corresponding to a fifth embodiment;
- Fig. 2A: A cross-section of a semi-finished product at the beginning of the execution of a manufacturing method corresponding to a first embodiment;
- Fig. 2B: The cross-section of the semi-finished product from Fig. 2A after formation of the recesses in the manufacturing method corresponding to the first embodiment;
- Fig. 2C: The cross-section of the semi-finished product of Fig. 2B shortly before the forming process of the manufacturing method corresponding to the first embodiment;
- Fig. 2D: The cross-section of Fig. 2C, but during or after carrying out the forming process of the manufacturing method corresponding to the first embodiment;
- Fig. 3A: A cross-section of a semi-finished product after formation of the recesses and immediately at the start of the forming process in a manufacturing method corresponding to a second embodiment;
- Fig. 3B: The cross-section of Fig. 3A, but after carrying out the forming process of the manufacturing method corresponding to the second embodiment;
- Fig. 4A: A cross-section of a semi-finished product after formation of the recesses and immediately at the start of the forming process in a manufacturing method corresponding to a third embodiment;
- Fig. 4B: The cross-section of Fig. 4A, but after the partial implementation of the forming process of the manufacturing method corresponding to the third embodiment;
- Fig. 4C: The cross-section of Fig. 4B, but after the forming process of the manufacturing method corresponding to the third embodiment example has been fully carried out;
- Fig. 5A: A cross-section of a semi-finished product after the formation of the recesses and immediately at the beginning of the forming process in a manufacturing method corresponding to a fourth embodiment;
- Fig. 5B: The cross-section of Fig. 5A, but after the partial implementation of the forming process of the manufacturing method corresponding to the fourth embodiment;
- Fig. 5C: The cross-section of Fig. 5B, but after the forming process of the manufacturing method corresponding to the fourth embodiment has been fully carried out;
- Fig. 6A: A cross-section of a semi-finished product after the formation of the recesses and immediately at the beginning of the forming process in a manufacturing method corresponding to a fifth embodiment;
- Fig. 6B: The cross-section of Fig. 6A, but after partial implementation of the forming process of the manufacturing method corresponding to the fifth embodiment;
- Fig. 6C: The cross-section of Fig. 6B, but after the forming process of the manufacturing method corresponding to the fifth embodiment has been fully carried out;
- Fig. 7A: A cross-section of a semi-finished product after the formation of the recesses and immediately at the beginning of the forming process in a manufacturing method corresponding to a sixth embodiment;
- Fig. 7B: The cross-section of Fig. 7A, but after partial implementation of the forming process of the manufacturing method according to the sixth embodiment;
- Fig. 7C: The cross-section of Fig. 7B, but after the forming process of the manufacturing method corresponding to the sixth embodiment has been fully carried out;
- Fig. 8A: A cross-section of a semi-finished product after the formation of the recesses and immediately at the beginning of the forming process in a manufacturing method corresponding to a seventh embodiment;
- Fig. 8B: The cross-section of Fig. 8A, but after partial implementation of the forming process of the manufacturing method corresponding to the seventh embodiment;
- Fig. 8C: The cross-section of Fig. 8B, but after the forming process of the manufacturing method corresponding to the seventh embodiment has been fully carried out;
- Fig. 9A: A cross-section of a semi-finished product after the formation of the recesses and immediately at the beginning of the forming process in a manufacturing method corresponding to an eighth embodiment;
- Fig. 9B: The cross-section of Fig. 9A, but after partial implementation of the forming process of the manufacturing method corresponding to the eighth embodiment;
- Fig. 9C: The cross-section of Fig. 9B, but after the forming process of the manufacturing method corresponding to the eighth embodiment has been fully carried out;
- Fig. 10A: A cross-section of a semi-finished product after the formation of the recesses and immediately at the beginning of the forming process in a manufacturing method corresponding to a ninth embodiment;
- Fig. 10B: The cross-section of Fig. 10A, but after partially performing the forming process of the manufacturing method corresponding to the ninth embodiment;
- Fig. 10C: The cross-section of Fig. 10B, but after the forming process of the manufacturing method corresponding to the ninth embodiment has been fully carried out;
- Fig. 11A: A cross-section of a semi-finished product made of an aluminum composite panel after the formation of the recesses and immediately at the beginning of the forming process in a manufacturing method corresponding to a ninth embodiment;
- Fig. 11B: The cross-section of Fig. 11A, but after partially performing the forming process of the manufacturing method corresponding to the ninth embodiment; and
- Fig. 11C: The cross-section of Fig. 11B, but after the forming process of the manufacturing method corresponding to the ninth embodiment has been fully carried out.

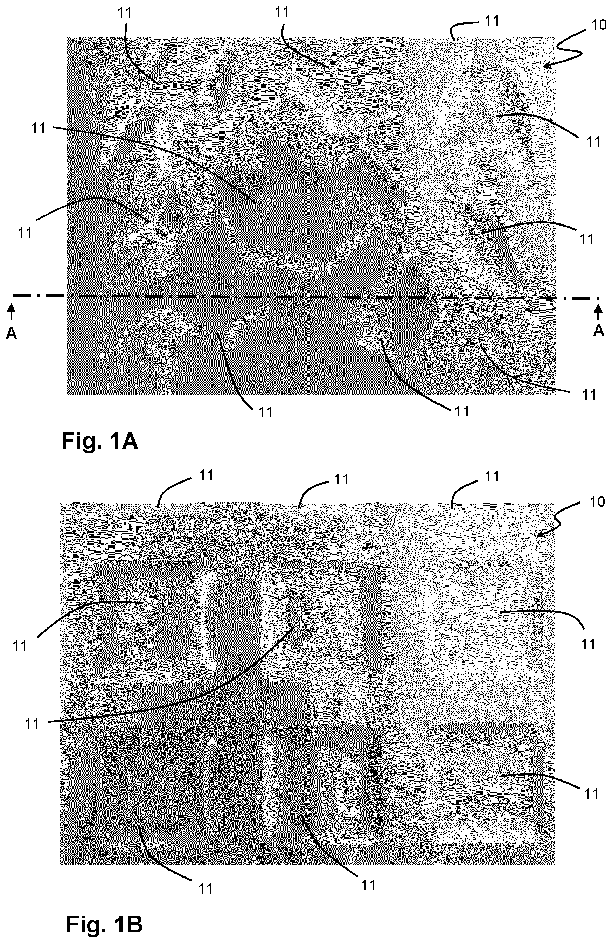

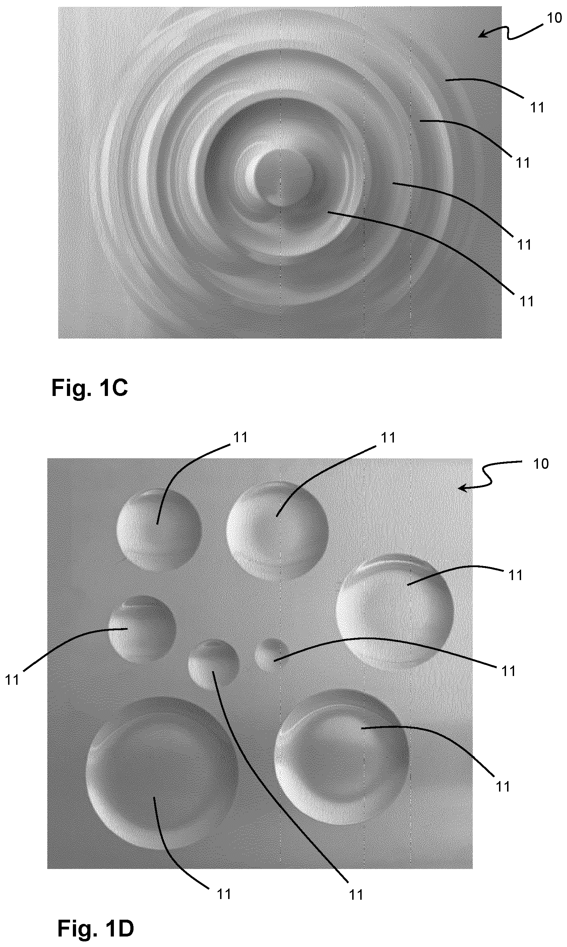

Figures 1A to 1E show embodiments of different reliefed components 10 which have been produced or can be produced by the method according to the invention.

With the method according to the invention, reliefed components 10 are formed which have curved surface structures or pan structures 11. Each of the reliefed components 10 comprises a plurality of such surface structures 11, although it is also possible to form a reliefed component 10 with only a single surface structure or pan structure 11. Although in the views shown the individual surface structures 11 are concave (i.e., curved into the image plane), the present invention is not limited to the formation of concave surface structures 11. Rather, it is also possible to form convex surface structures 11. It is important, however, that the surface structures 11 formed according to the invention are three-dimensional and are curved or have "soft" transitions, and are not merely in the form of folded structures with "hard" folding or crease lines.

The curved design of the surface structures 11 makes it possible to achieve a surprisingly high rigidity for the formed component 10 or for the individual surface structures 11, although relatively large areal recesses 3 have to be made to form the semi-finished product 1 and accordingly a comparatively large amount of material is removed from the original semi-finished product 1. In this context, it is particularly advantageous if the surface structures 11 formed are not only single, but even double curved, as is the case in the embodiment examples shown here. Particularly preferably, at least one curved surface structure 11 forms a locally limited pan in the reliefed component 10.

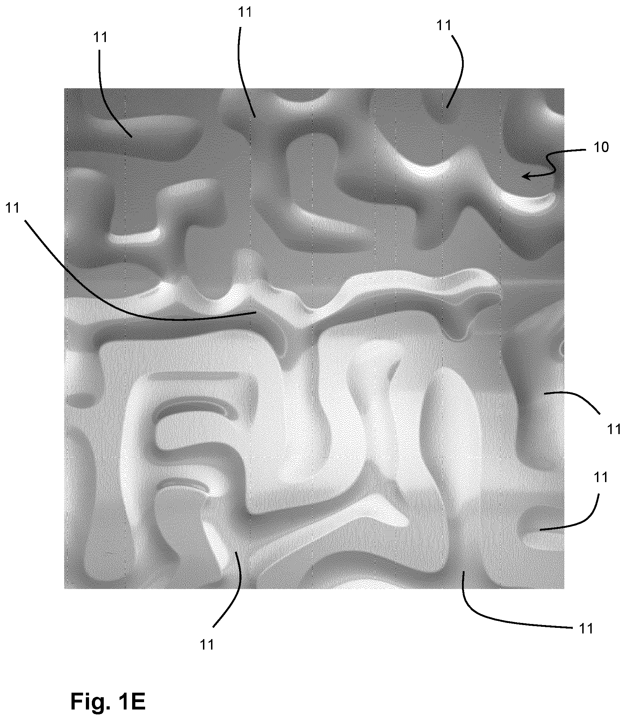

The specific shapes of the recesses 3 formed in each case and of the surface structures 11 obtained thereby are not limited to specific geometric designs. For example, as shown in Fig. 1A, freely defined geometric shapes with an at least partially rectilinear circumference can be formed. In this case, the rectilinear sections of the circumference of the formed surface structures 11 are connected to each other via roundings. Also conceivable, in accordance with Figures 1B to 1D, are simpler geometric shapes such as, for example, areal squares, areal circular rings and/or circular surfaces. A wide variety of shapes can also be arbitrarily combined and/or provided side by side to form more complex shapes. Examples of more complex shapes include camouflage patterns, as shown in Fig. 1E, symbols, lettering and/or logos.

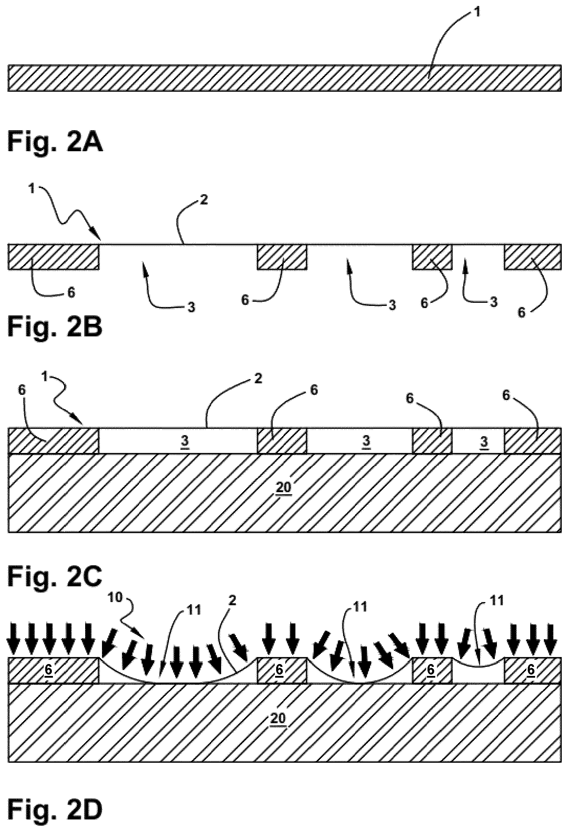

In the following, with reference to Figs. 2A to 2D, a manufacturing method corresponding to a first embodiment for a manufacturing method according to the invention is described. For example, the method described below can be used to manufacture the component 1 shown in Fig. 1A, wherein the cross-section in Fig. 2D extends along the section line A-A shown in Fig. 1A.

The starting point is a semi-finished product 1 in the form of a flat aluminum plate (see Fig. 2A). However, not only plasticizable metals such as aluminum or aluminum composite panels are suitable as materials for a semi-finished product 1, but also thermoplastics, plasticizable plastics and/or wood, stone or wood-based material veneers. When veneers are used, they must be permanently deformable in themselves, e.g. by the veneer substrate material or by bonding with a plasticizable material. Otherwise, the veneer will return to its original position after the pressure is released. Even polycarbonate and glass can be used for relief forming using suitable temperatures.

In a first step, a number of areal recesses 3 are made in a bottom side of these, for example by milling, to thus form the semi-finished product 1 shown in Fig. 2B. The milled edge does not necessarily have to run orthogonally to the direction of the expansions 3. It can also merge into the areal recesses 3 at an angle or in a radius. In this case, however, a top surface or top layer 2 of the semi-finished product 1 remains unaffected. On the bottom side of the semi-finished product 1, several webs 6 remain between the recesses 3 formed. At this point, it should be emphasized once again that, according to the invention, we are dealing with areal recesses 3, even if this cannot be seen directly from the cross-section in Fig. 2B.

Depending on the design and, in particular, the material composition of the semi-finished product 1, other processes for forming the at least one areal recess 3 are of course also conceivable in addition to or as an alternative to milling. Examples of this would be sawing, eroding, cutting, punching, drilling, drill milling, carving and/or indenting, whereby the formation of the respective recess 3 can take place either manually or mechanically. To form the desired reliefed component 10, the semi-finished product 1 is aligned with the recesses 3 facing downwards and positioned on a flat counterpressure plate 20. This planar counterpressure plate 20 has at least the same dimensions as the semi-finished part 1 and supports at least the webs 6 of the semi-finished part 1, as shown in FIG. 2C. However, such a counterpressure plate 20 is not always necessary to implement the manufacturing process according to the invention. This will be clearly apparent from the further embodiments of manufacturing processes according to the invention described further below.

Finally, as can be seen in Fig. 2D, the semi-finished product 1 is subjected to fluid pressure (see the arrows) at its cover surface 2 in such a way that the semi-finished product 1 or the cover layer 2 of the semi-finished product 1 is plastically deformed (i.e. "indented") in the area of the recesses 3. Air, or another fluid, can serve as the medium for pressurization. A die, on the other hand, is not a suitable medium for pressurization in the sense of the invention. As a result of the applied fluid pressure, the desired curved surface structures 11 are formed from the cover surface 2 of the semi-finished product 1 by plastic and permanent deformation of the cover surface.

The forming process is best carried out at absolute pressures of 0 to 42 bar. It may also be advantageous to carry out the forming process at a specific temperature and/or specific humidity (particularly in the case of wood veneers) at which the materials of semi-finished product 1 to be formed are particularly good for permanent forming. According to experience, corresponding temperatures are preferably in a range from 0°C to 450 °C. Working at room temperature is of course particularly easy here, while temperatures in a range of 80°C to 120°C are regularly advantageous for veneers. For plastics such as polyethylene, temperatures of 160°C to 180°C have proved particularly suitable. However, significantly higher temperatures may of course also be necessary or suitable. For aluminum alloys, for example, temperatures of up to 650°C have proven to be particularly suitable. For metallic ferrous alloys, temperatures of up to 1200°C may even be suitable or even necessary.

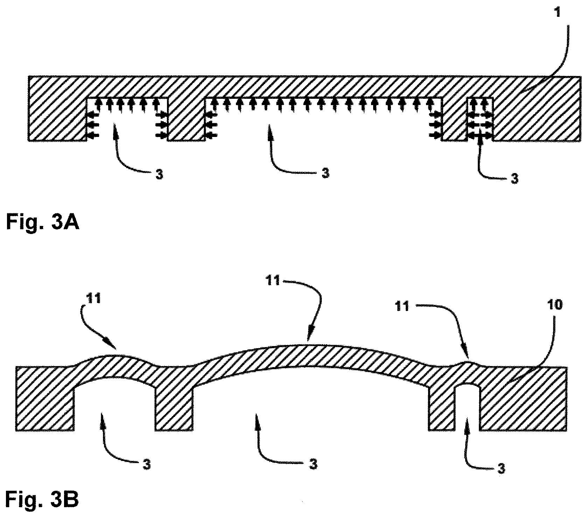

Further examples of manufacturing processes according to the invention are described below with reference to Figures 3 to 11. For reasons of clarity, no drawings are given of any bearings against which the semi-finished product is pressed during pressure application, such as counterpressure plates 20. For the same reasons, not all arrows symbolizing the application of pressure are shown.

In contrast to the application of fluid pressure to the semi-finished product 1 from "above" directly onto the cover surface 2, as shown in Fig. 2D, pressure can also be applied from "below", i.e. past the webs 6 into the recesses 3, as shown in Fig. 3A (indicated by the arrows in Fig. 3A). The counterpressure plate 20 described above could be replaced, for example, by a retaining plate (not shown) provided with corresponding recesses, which is bonded to the webs 6 from below. Also, a counterpressure plate (not shown) provided with corresponding recesses could be positioned on top of the semi-finished product 1 for the forming process. By reversing the direction of pressurization, instead of a reliefed component 10 with surface structures 11 that are concave in plan view (see Fig. 1A or Fig. 2D), a component 10 with surface structures 11 that are convex in plan view is formed, as shown in Fig. 3B.

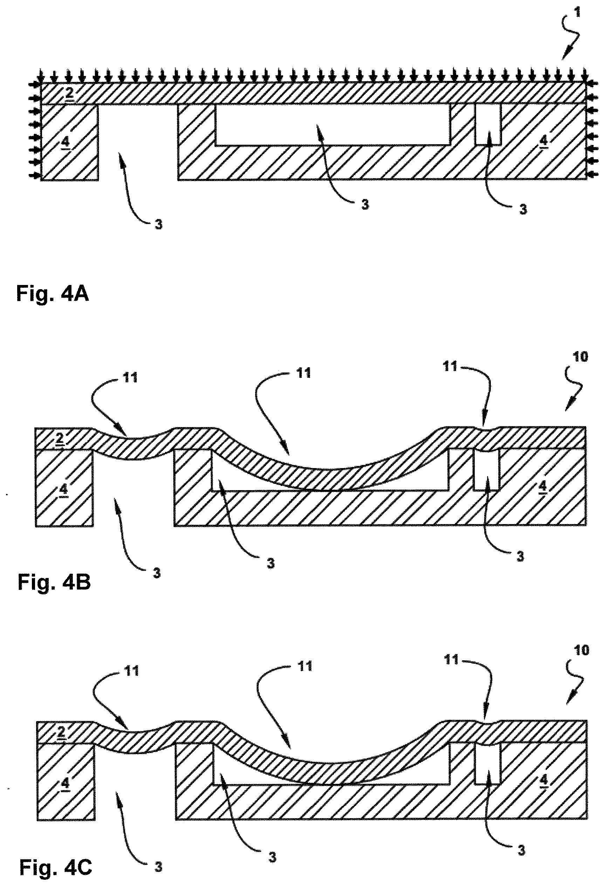

In the embodiment example shown in Figures 4A to 4C, the semi-finished product 1 is a composite component comprising two layers 2 and 4 aligned parallel to one another in the plane in which the semi-finished product 1 extends. The cover layer 2 is formed, for example, from aluminum, while the support layer 4 is formed from plastic or a wood or wood-based material. However, other material compositions are also conceivable. Three recesses 3 of different depths are formed in the support layer 4, while the cover layer 2 has no recesses. In this case, formed recesses 3 can also pass through the entire cover layer 4. Preferred depths for the formed recesses 3 are in a range from 10% to 99.9% of the thickness of the semi-finished product 1. This is because at a component height of, for example, 100 mm, the cover layer thickness is still 0.5 mm. However, the minimum thickness of the semi-finished product 1 obtained is between 0.1 mm and 10 mm, depending on the choice of the specific material or the specific material composition for the semi-finished product 1. For a covering layer 3 with a thickness of, for example, 0.05 mm, as can occur with a technical foil, the thickness of the semi-finished product 3 is then 1.0 mm. This makes it possible to ensure a certain basic structural stability of the semi-finished product 1, while allowing suitable pressure forming. As also shown here, the individual recesses 3 can have different depths. This enables further adjustment of the shape of the surface structures 11 obtained. Also, the recesses 3 may be provided in the interior of the semi-finished product 1. Such internal recesses 3 are then practically formed in the respective layers 2 and/or 4 before an assembly of the individual layers 2 and 4 of the semi-finished product 1. The formation of recesses 3 in a corresponding layer 2 and/or 4 of the semi-finished product 1 prior to its composition is not limited to situations in which recesses 3 are formed in the interior of the semi-finished product 1. It is only important that the individual layers 2 and 4 form a composite during the forming process. This can be done, for example, by bonding, static friction or clamping of the individual layers 2 and 4. If necessary, this bond can also be released again after the forming process.

While Fig. 4A shows the semi-finished product 1 used immediately at the start of the forming process by means of pressurization, Fig. 4B shows the state of the semi-finished product in an intermediate state. This corresponds to forming up to or shortly before a singular initial contact between the cover layer 2 or shell 3 with the carrier layer 4. Up to this state, the cover layer 2 has been deformed in the areas of the recesses 3 without contact with the carrier layer 4. It should be noted at this point that this "intermediate state" can also represent the final state of a reliefed component 10 if the forming process is terminated here. It is also possible, of course, to end the forming process earlier. In the present embodiment, after the intermediate state shown in Fig. 4B, a still further forming process is carried out to thus form the reliefed component of Fig. 4C. Here, the cover layer 2 comes to rest at least partially against the support layer 4 in the region of the central recess 3. This results in a flat bottom and steeper side walls of the formed central surface structure 11. The same concept for the "intermediate state" applies to the embodiments of manufacturing processes according to the invention described below.

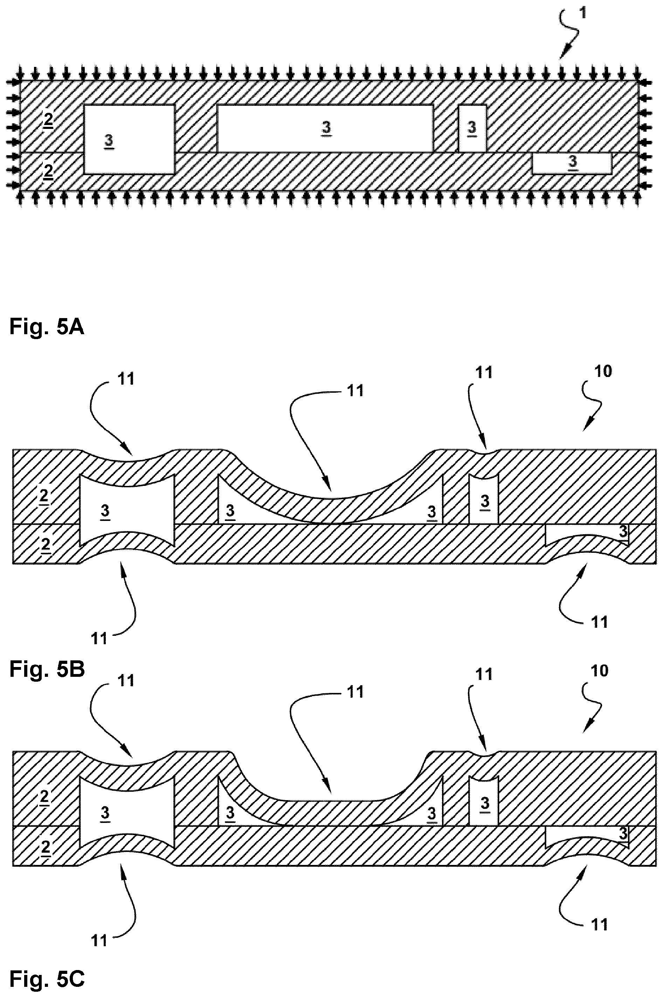

As shown in Figures 5A to 5C, a semi-finished product 1 can also have two cover layers 2, some of which have different thicknesses, which lie on top of each other and are joined together in an airtight manner at least for the forming process. In this way, both semi-finished products 1 can be simultaneously subjected to fluid pressure in the course of the forming process to form the desired surface structures 11. In this case, no counterpressure plate 20 is required. For example, a pressure chamber can be equipped with two semi-finished products 1 bonded at the edges. The individual semi-finished products 1 are then formed simultaneously when fluid pressure is applied. Here, both cover layers 2 are each provided separately with corresponding recesses 3. It is thus possible either to form a combined reliefed component 10, which has curved surface structures 11 on both its top side and its bottom side, or to obtain two separate reliefed components by loosening the connection between the two cover layers 2 after the forming process. Here, Fig. 5B again shows the intermediate state of the forming process up to or shortly before a singular initial contact between the top cover layer 2 or pan 3 shown lying on top in the figure with the second cover layer 2 lying on the bottom, which is thicker in the middle. Fig. 5C then shows the final state, in which the top cover layer has three inwardly deformed areas and the bottom cover layer has two inwardly curved surface structures 11.

It should be noted that, due to the self-contained recesses 3, the forming process carried out here can also be carried out simply by lowering the semi-finished product 1 into an open body of water, such as a lake, a sea or a water pit, if the material composition of the semi-finished product 1 is appropriate. For this purpose, the semi-finished product 1, which is sealed at its edges to another semi-finished product 1 in an air- or fluid-tight manner with or without an intermediate plate 20 in between, or a counterpressure plate 20, can be positioned in a suitable holding device (e.g. open or closed basket, hook, net, etc.) suspended from a chain or rope.

If the buoyancy of the enclosed air volume exceeds the dead weight, additional balancing weights can be used. The fluid pressure applied for deformation is defined by the depth to which the semi-finished product 1 is lowered. For example, at a depth of 80 m, the semi-finished product 1 would then be physically deformed in a natural way with a pressure of 8 bar. The use of special, possibly very expensive devices for forming can thus be regularly avoided.

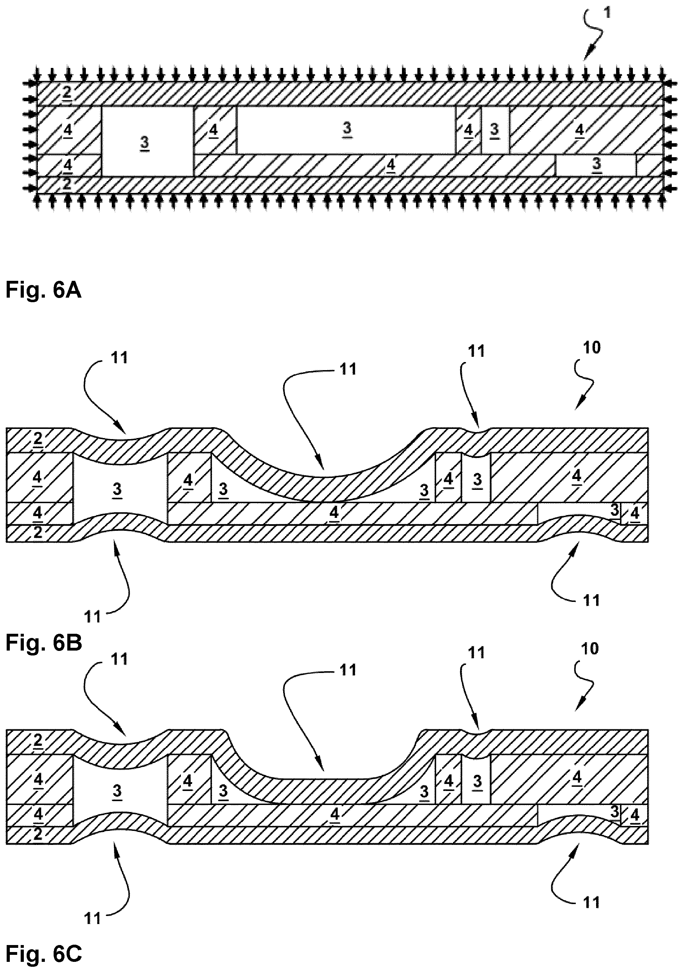

Also, as shown in Figures 6A to 6C, the two cover layers 2 may each have no recesses 3 at all, while one or more intermediate layers 4 are provided with corresponding recesses 3 and joined to the two cover layers 2 before the forming process.

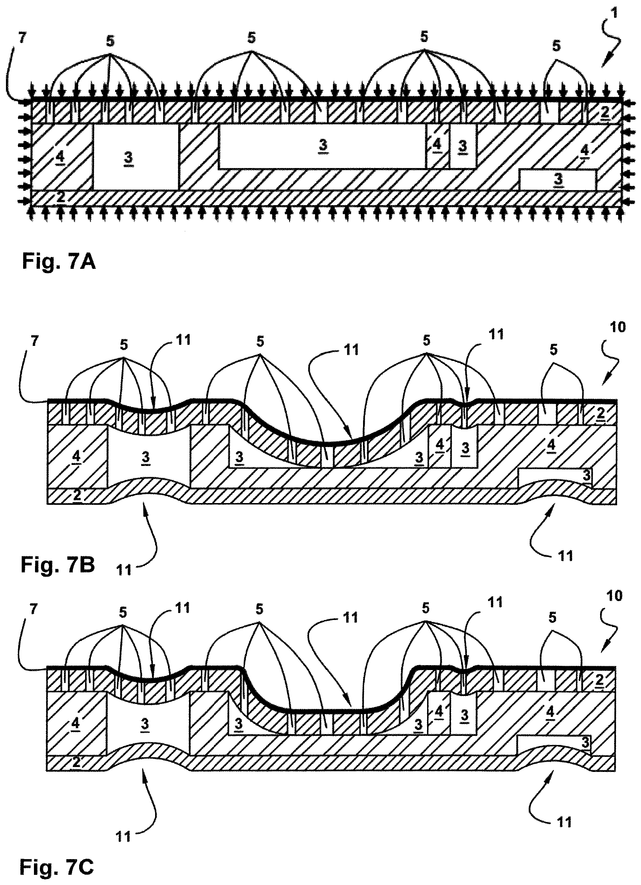

Also, at least one of the cover layers 2 to be formed may have at least one opening 5 completely penetrating the corresponding layer 2 (here the upper cover layer), as shown in Figures 7A to 7C. It may then be necessary for the forming process to provide the respective cover layer 2 with at least one film or membrane 7 in the region of the respective opening 5, at least for the forming process, which then closes the opening 5 or openings 5. In this way, the pressure differences necessary for forming can finally be ensured at the layers 2 to be formed. If required, however, individual or even all the openings 5 provided can remain unclosed. In this way, the pressure distribution across the semi-finished product 1 can be varied.

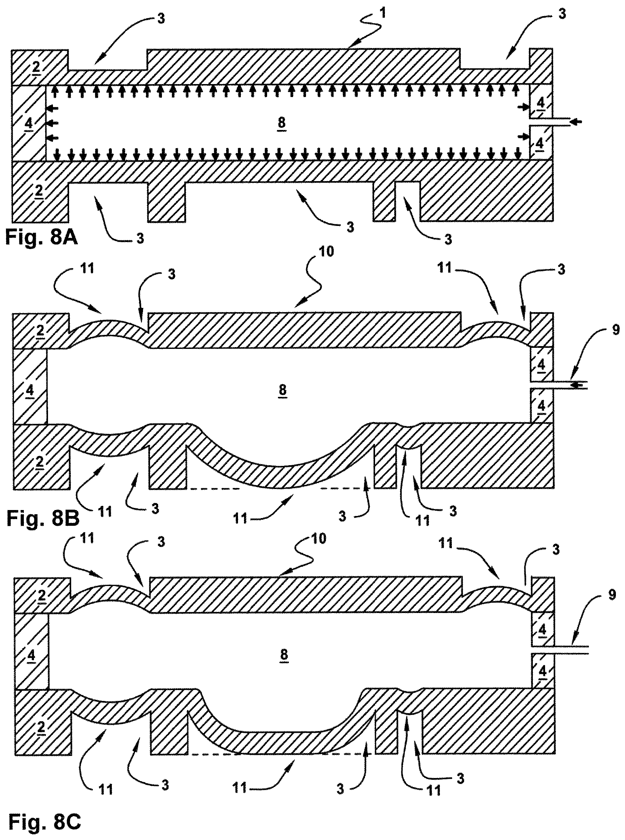

According to the embodiment example shown in Figures 8A to 8C, an inner pressure chamber 8 is formed by an intermediate layer 4, which is positioned between two cover layers 2. This can be pressurized with pressure medium through a pressure media connection 9. The recesses 3 can be formed in the two cover layers 2. During the forming process, fluid pressure or pressure medium is applied to the pressure chamber 8 through the pressure media connection 9, which then leads to the formation of the curved three-dimensional surface structures 11. Consequently, the present invention includes not only embodiments in which fluid pressure is applied to the semi-finished product 1 from the outside, but also significantly more complex variants. It is also possible to combine external pressurization with internal pressurization. It is also possible to replace and/or supplement applied overpressures at least partially by suitable low pressures.

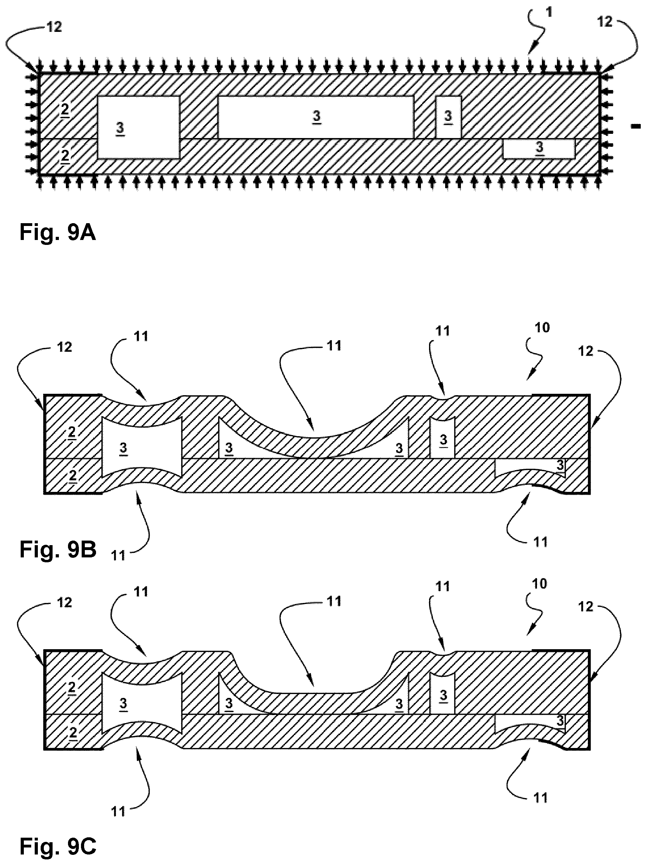

Figures 9A to 9C show a further example of a manufacturing method according to the invention. Here, the semi-finished product 1 intended for forming corresponds to that shown in Fig. 5A. The only difference from the embodiment example shown in Figs. 5A to 5C is that the two cover layers 2 are connected to one another in an airtight manner via external fixing and sealing means 12. Via such external fixing and/or sealing means 12, internal fixing and/or sealing means, such as adhesive layers or the like between the cover layers 2, can be substituted. In the shown embodiment example, the external fixing and/or sealing means 12 are formed by adhesive tape which is provided along the edge or periphery of the semi-finished product 1. Appropriate fixing and sealing is regularly necessary to ensure the pressure differences required for forming the semi-finished product 1. This applies in particular to rough surfaces of the individual layers 2 and 4 forming the semi-finished product.

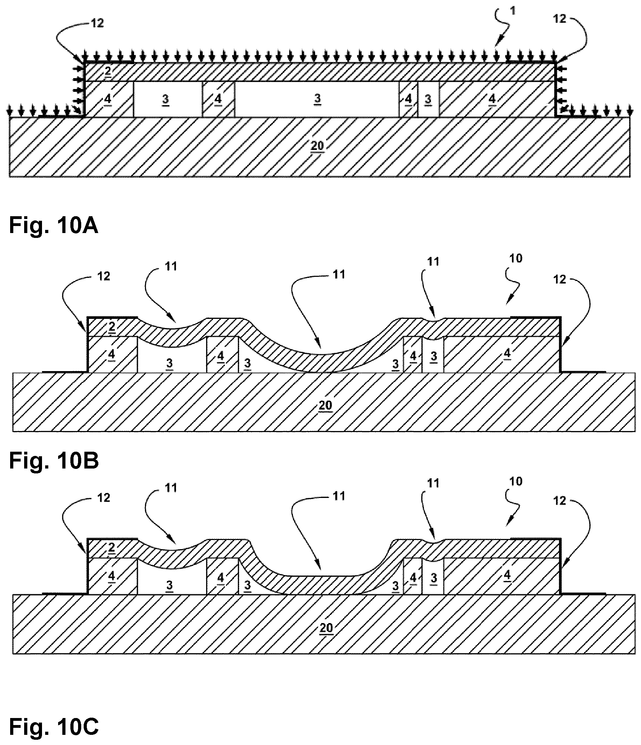

As shown in Figures 10A to 10C, such external fixing and/or sealing means 12 can be used not only to connect the different layers 2 and 4 of the semi-finished product 1 to each other in a fluid- and air-tight manner, but also to fix and seal the entire semi-finished product 1 to a counterpressure plate 20 for the forming process.

As the embodiments shown indicate, there is a wide range of possibilities for implementing the manufacturing process according to the invention. The examples of embodiments shown are not to be understood as exhaustive or limiting. In this context, it should also be explicitly pointed out once again that the present invention covers not only the process according to the invention, but also correspondingly formed reliefed components.

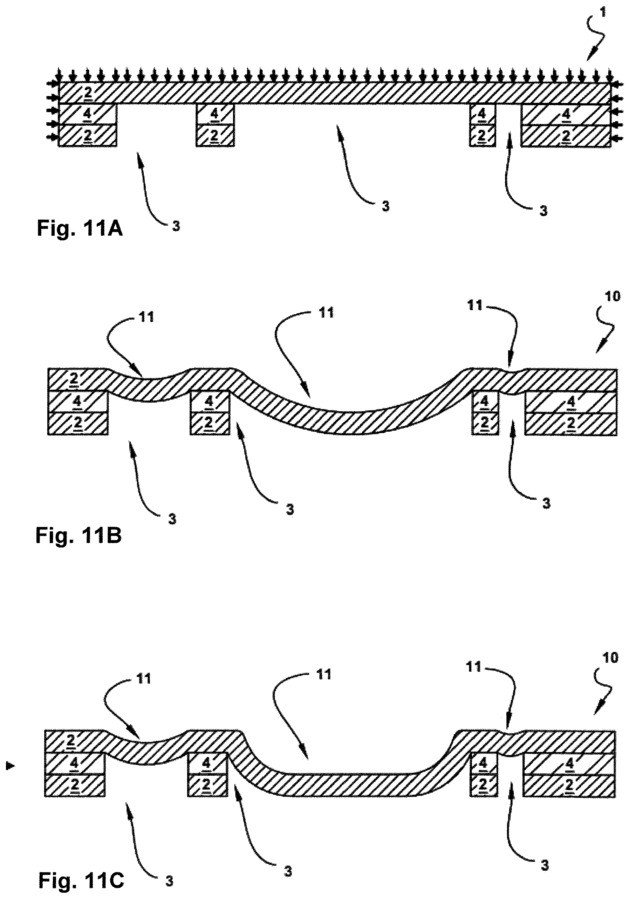

The embodiment example shown in Fig. 11A to Fig. 11C illustrates the use of a classic aluminum composite panel with an intermediate layer 4 made of plastic and two outer cover layers 2 made of aluminum as the starting material for the semi-finished product 1.

### REFERENCE SIGNS

- 1: Semi-finished product
- 2: Cover surface / cover layer
- 3: Areal recess
- 4: Intermediate layer / support layer
- 5: Opening
- 6: Web
- 7: Foil / Membrane
- 8: Internal pressure chamber
- 9: Pressure media connection
- 10: Reliefed component
- 11: Curved surface structure
- 12: External fixing and sealing means
- 20: Counterpressure plate

## Claims

1. Method for the mold-free production of a reliefed component (10),
**characterized in that**
initially at least one areal recess (3) is made in a flat semi-finished product (1); and then the semi-finished product (1) is subjected to fluid pressure transversely to its plane of extension in such a way that the semi-finished product (1) is permanently deformed mold-free in the region of at least one areal recess (3) and forms at least one curved surface structure (11).

2. Method according to claim 1,
**characterized in that**
at least one surface structure (11) is formed, which is single or double curved and in particular forms a locally limited pan in the reliefed component (1).

3. Method according to claim 1 or 2,
**characterized in that**
the semi-finished product (1) consists of a single material.

4. Method according to claim 1 or 2,
**characterized in that**
the semi-finished product (1) is a composite component with at least two areas of different materials, in particular of the same or different types.

5. Method according to claim 4,
**characterized in that**
the semi-finished product (1) has at least two layers (2, 4) aligned parallel to one another in the plane in which the semi-finished product (1) extends, the layers (2, 4) being of the same or a different material, in particular a composite of two metallic cover layers and a plastic core.

6. Method according to claim 5,
**characterized in that**
at least one areal recess (3) is introduced into at least one layer (2, 4) of the semi-finished product (1), while no corresponding recess (3) is introduced into at least one other layer (2, 4) of the semi-finished product (1).

7. Method according to any one of the preceding claims,
**characterized in that**
at least one areal recess (3) is introduced on a top side of the semi-finished product (1), on a bottom side of the semi-finished product (1) or in the interior of the semi-finished product (1).

8. Method according to any one of the preceding claims,
**characterized in that**
the semi-finished product (1) has at least one flat cover layer or cover surface (2) which is deformed by the application of pressure to form the surface structure (11).

9. Method according to claim 8,
**characterized in that**
the semi-finished product (1) has a cover layer or cover surface (2) both on its top side and on its bottom side, which is deformed by the application of pressure to form the curved surface structure (11).

10. Method according to any one of the preceding claims,
**characterized in that**
the semi-finished product (1) is at least partially formed from plasticizable metal, thermoplastic, plasticizable plastic and/or wood, stone or wood-based material veneer.

11. Method according to any one of the preceding claims,
**characterized in that**
the semi-finished product (1) is provided with a membrane or foil (7) at least locally, preferably completely, before pressurization.

12. Method according to one of the preceding claims,
**characterized in that**
the at least one areal recess (3) is formed with a depth which lies in a range from 10% to 99.9% of the thickness of the semi-finished product (1).

13. Method according to one of the preceding claims,
**characterized in that**
the at least one areal recess (3) is formed with such a depth that the semi-finished product (1) has in cross-section at its thinnest point at least a thickness of 0.1 mm to 10 mm.

14. Method according to one of the preceding claims,
**characterized in that**
different areal recesses (3) provided in the semi-finished product (1) are formed with different depths and/or individual areal recesses (3) are formed with a varying depth.

15. Method according to any one of the preceding claims,
**characterized in that**
at least one areal recess (3) is formed by milling, sawing, eroding, cutting, punching, drilling, drill milling, carving and/or denting, either manually or mechanically.

16. Method according to one of the preceding claims,
**characterized in that,**
before fluid pressure is applied, two separate semi-finished products (1) are placed on top one another and, in particular, at least the edges of the two separate semi-finished products (1) are joined to one another in an airtight manner in order to form a combined semi-finished product (1).

17. Method according to claim 16,
**characterized in that**
at least one intermediate layer (4), in particular in the form of a thin plate, is positioned between the two separate semi-finished products (1) and is joined to the two separate semi-finished products (1) in an airtight manner at least at the edges.

18. Method according to any one of the preceding claims,
**characterized in that**
the semi-finished product (1) is positioned on a flat counterpressure plate (20) before being subjected to fluid pressure and, in particular, is firmly connected to the counterpressure plate (20) at least at the edges of the semi-finished product (1) for the forming process.

19. Method according to any one of the preceding claims,
**characterized in that**
the semi-finished product (1) is deformed by lowering it into a body of water by means of the depth-dependent water pressure.

20. Relief component (10),
**characterized in that**
the reliefed component (10) has been produced by means of a method according to one of the preceding claims.

## Patentansprüche

1. Verfahren zur formwerkzeugfreien Herstellung eines reliefierten Bauteils (10),
**dadurch gekennzeichnet, dass**
zunächst in ein flaches Halbfabrikat (1) wenigstens eine flächige Ausnehmung (3) eingebracht wird; und danach
das Halbfabrikat (1) quer zu seiner Erstreckungsebene so mit Fluiddruck beaufschlagt wird, dass
das Halbfabrikat (1) formwerkzeugfrei im Bereich wenigstens einer flächigen Ausnehmung (3) bleibend verformt wird und wenigstens eine gekrümmte Oberflächenstruktur (11) ausbildet.

2. Verfahren nach Anspruch 1,
**dadurch gekennzeichnet, dass**
wenigstens eine Oberflächenstruktur (11) gebildet wird, welche einfach oder doppelt gekrümmt ist und insbesondere eine lokal begrenzte Schale in dem reliefierten Bauteil (1) bildet.

3. Verfahren nach Anspruch 1 oder 2,
**dadurch gekennzeichnet, dass**
das Halbfabrikat (1) aus einem einzigen Werkstoff besteht.

4. Verfahren nach Anspruch 1 oder 2,
**dadurch gekennzeichnet, dass**
das Halbfabrikat (1) ein Verbundbauteil mit wenigstens zwei Bereichen unterschiedlicher, insbesondere artgleicher oder artfremder, Werkstoffe ist.

5. Verfahren nach Anspruch 4,
**dadurch gekennzeichnet, dass**
das Halbfabrikat (1) wenigstens zwei in der Erstreckungsebene des Halbfabrikats (1) parallel zueinander ausgerichtete Schichten (2, 4) artgleichen oder artfremden Werkstoffs aufweist, insbesondere ein Verbund aus zwei metallischen Deckschichten und einem Kunststoffkern ist..

6. Verfahren nach Anspruch 5,
**dadurch gekennzeichnet, dass**
wenigstens eine flächige Ausnehmung (3) in wenigstens eine Schicht (2, 4) des Halbfabrikats (1) eingebracht wird, während in wenigstens eine andere Schicht (2, 4) des Halbfabrikats (1) keine entsprechende Ausnehmung (3) eingebracht wird.

7. Verfahren nach einem der vorhergehenden Ansprüche,
**dadurch gekennzeichnet, dass**
wenigstens eine flächige Ausnehmung (3) an einer Oberseite des Halbfabrikats (1), an einer Unterseite des Halbfabrikats (1) oder im Inneren des Halbfabrikats (1) eingebracht wird.

8. Verfahren nach einem der vorhergehenden Ansprüche,
**dadurch gekennzeichnet, dass**
das Halbfabrikat (1) wenigstens eine ebene Deckschicht oder Deckfläche (2) aufweist, welche durch die Druckbeaufschlagung zur Bildung der Oberflächenstruktur (11) verformt wird.

9. Verfahren nach Anspruch 8,
**dadurch gekennzeichnet, dass**
das Halbfabrikat (1) sowohl an seiner Oberseite als auch an seiner Unterseite eine Deckschicht oder Deckfläche (2) aufweist, welche durch die Druckbeaufschlagung zur Bildung der gekrümmten Oberflächenstruktur (11) verformt wird.

10. Verfahren nach einem der vorhergehenden Ansprüche,
**dadurch gekennzeichnet, dass**
das Halbfabrikat (1) zumindest teilweise aus plastifizierbarem Metall, Thermoplast, plastifizierbarem Kunststoff und/oder Holz-, Stein- oder Holzwerkstofffurnier gebildet ist.

11. Verfahren nach einem der vorhergehenden Ansprüche,
**dadurch gekennzeichnet, dass**
das Halbfabrikat (1) vor der Druckbeaufschlagung zumindest lokal, vorzugsweise vollumfänglich, mit einer Membran oder Folie (7) versehen wird.

12. Verfahren nach einem der vorhergehenden Ansprüche,
**dadurch gekennzeichnet, dass**
die wenigstens eine flächige Ausnehmung (3) mit einer Tiefe gebildet wird, welche in einem Bereich von 10% bis 99,9 % der Dicke des Halbfabrikats (1) liegt.

13. Verfahren nach einem der vorhergehenden Ansprüche,
**dadurch gekennzeichnet, dass**
die wenigstens eine flächige Ausnehmung (3) mit einer solchen Tiefe gebildet wird, dass das Halbfabrikat (1) im Querschnitt an seiner dünnsten Stelle mindestens eine Dicke von 0,1 mm bis 10 mm aufweist.

14. Verfahren nach einem der vorhergehenden Ansprüche,
**dadurch gekennzeichnet, dass**
unterschiedliche in dem Halbfabrikat (1) vorgesehene flächige Ausnehmungen (3) mit unterschiedlichen Tiefen und/oder einzelne flächige Ausnehmungen (3) mit einer variierenden Tiefe, gebildet werden.

15. Verfahren nach einem der vorhergehenden Ansprüche,
**dadurch gekennzeichnet, dass**
wenigstens eine flächige Ausnehmung (3) durch Fräsen, Sägen, Erodieren, Schneiden, Stanzen, Bohren, Bohrfräsen, Schnitzen und/oder Eindrücken, und zwar entweder händisch oder maschinell, gebildet wird.

16. Verfahren nach einem der vorhergehenden Ansprüche,
**dadurch gekennzeichnet, dass**
vor der Beaufschlagung mit Fluiddruck zwei separate Halbfabrikate (1) aufeinandergelegt werden und insbesondere wenigstens die Ränder der beiden separaten Halbfabrikate (1) luftdicht miteinander verbunden werden, um ein kombiniertes Halbfabrikat (1) zu bilden.

17. Verfahren nach Anspruch 16,
**dadurch gekennzeichnet, dass**
zwischen den beiden separaten Halbfabrikaten (1) wenigstens eine Mittelschicht (4), insbesondere in Gestalt einer dünnen Platte, positioniert und wenigstens an den Rändern luftdicht mit den beiden separaten Halbfabrikaten (1) verbunden wird.

18. Verfahren nach einem der vorhergehenden Ansprüche,
**dadurch gekennzeichnet, dass**
das Halbfabrikat (1) vor der Beaufschlagung mit Fluiddruck auf einer ebenen Gegendruckplatte (20) positioniert wird und insbesondere wenigstens an den Rändern des Halbfabrikats (1) für den Umformprozess fest mit der Gegendruckplatte (20) verbunden wird.

19. Verfahren nach einem der vorhergehenden Ansprüche,
**dadurch gekennzeichnet, dass**
das Halbfabrikat (1) durch Absenken in ein Gewässer mittels des tiefenabhängigen Wasserdrucks verformt wird.

20. Reliefiertes Bauteil (10),
**dadurch gekennzeichnet, dass**
das reliefierte Bauteil (10) mittels eines Verfahrens nach einem der vorhergehenden Ansprüche hergestellt wurde.

## Revendications

1. Procédé de production sans moule d'un composant à relief (10),
**caractérisé en ce que**
initialement au moins un évidement étendu (3) est réalisé dans un produit semi-fini plat (1) ; et ensuite
le produit semi-fini plat (1) est soumis à la pression d'un fluide transversalement à son plan d'étendue de façon que le produit semi-fini (1) est déformé de manière permanente sans moule dans la zone dudit au moins un évidement étendu (3) et forme au moins une structure de surface courbe (11).

2. Procédé selon la revendication 1,
**caractérisé en ce que**
au moins une structure de surface (11) est formée, et celle-ci est à courbure simple ou double et en particulier forme un creux localement limité dans le composant à relief (1).

3. Procédé selon la revendication 1 ou 2,
**caractérisé en ce que**
le produit semi-fini (1) est constitué d'un matériau unique.

4. Procédé selon la revendication 1 ou 2,
**caractérisé en ce que**
le produit semi-fini (1) est un composant composite comportant au moins deux zones en matériaux différents, en particulier d'un même type ou de types différents.

5. Procédé selon la revendication 4,
**caractérisé en ce que**
le produit semi-fini (1) comprend au moins deux couches (2, 4) qui sont alignées parallèlement les unes aux autres dans le plan dans lequel le produit semi-fini (1) s'étend, les couches (2, 4) étant constituées d'un même matériau ou de matériaux différents, et en particulier un composite constitué de deux couches de couverture métalliques et d'une âme en matière plastique.

6. Procédé selon la revendication 5,
**caractérisé en ce que**
au moins un évidement étendu (3) est introduit dans au moins une couche (2, 4) du produit semi-fini (1) tandis qu'aucun évidement correspondant (3) n'est introduit dans au moins une autre couche (2, 4) du produit semi-fini (1).

7. Procédé selon l'une quelconque des revendications précédentes,
**caractérisé en ce que**
au moins un évidement étendu (3) est introduit sur une partie supérieure du produit semi-fini (1), sur une partie inférieure du produit semi-fini (1) ou dans l'intérieur du produit semi-fini (1).

8. Procédé selon l'une quelconque des revendications précédentes,
**caractérisé en ce que**
le produit semi-fini (1) présente au moins une couche de couverture ou surface de couverture plane qui est déformée par application d'une pression pour former la structure de surface (11).

9. Procédé selon la revendication 8,
**caractérisé en ce que**
le produit semi-fini (1) présente une couche de couverture ou surface de couverture (2) sur sa face supérieure et sur sa face inférieure, et laquelle couche est déformée par application d'une pression pour former la structure de surface courbe (11).

10. Procédé selon l'une quelconque des revendications précédentes,
**caractérisé en ce que**
le produit semi-fini (1) est au moins en partie formé à partir de métal plastifiable, matière thermoplastique, matière plastique plastifiable et/ou bois, pierre ou un placage en matériau à base de bois.

11. Procédé selon l'une quelconque des revendications précédentes,
**caractérisé en ce que**
le produit semi-fini (1) est pourvu, au moins localement, de préférence complètement, d'une membrane ou d'une feuille (7) avant la mise sous pression.

12. Procédé selon l'une quelconque des revendications précédentes,
**caractérisé en ce que**
au moins un évidement étendu (3) est formé pour présenter une profondeur comprise entre 10 % et 99,9 % de l'épaisseur du produit semi-fini (1).

13. Procédé selon l'une quelconque des revendications précédentes,
**caractérisé en ce que**
ledit au moins un évidement étendu (3) est formé pour présenter une telle profondeur que le produit semi-fini (1) présente en coupe transversale, à son point le plus mince, au moins une épaisseur comprise entre 0,1 mm et 10 mm.

14. Procédé selon l'une quelconque des revendications précédentes,
**caractérisé en ce que**
différents évidements étendus (3) prévus dans le produit semi-fini (1) sont formés pour présenter des profondeurs différentes et/ou des évidements étendus individuels (3) sont formés pour présenter une profondeur variable.

15. Procédé selon l'une quelconque des revendications précédentes,
**caractérisé en ce que**
au moins un évidement étendu (3) est formé par fraisage, sciage, érosion, découpage, poinçonnage, perçage, fraisage-perçage, sculptage et/ou bosselage, soit de façon manuelle ou soit de façon mécanique.

16. Procédé selon l'une quelconque des revendications précédentes,
**caractérisé en ce que**
avant que la pression de fluide soit appliquée, deux produits semi-finis distincts (1) sont placés les uns sur les autres et, en particulier, au moins les bords des deux produits semi-finis distincts (1) sont reliés les uns sur les autres de manière étanche à l'air afin de former un produit semi-fini combiné.

17. Procédé selon la revendication 16,
**caractérisé en ce que**
au moins une couche intermédiaire (4), en particulier sous forme d'une plaque mince, est positionnée entre les deux produits semi-finis distincts (1) et reliée aux deux produits semi-finis distincts (1) de manière étanche à l'air au moins au niveau des bords.

18. Procédé selon l'une quelconque des revendications précédentes,
**caractérisé en ce que**
le produit semi-fini (1) est positionné sur une plaque de contre-pression plane (20) avant d'être soumis à une pression de fluide et, en particulier, est solidement relié à la plaque de contre-pression (20) au moins au niveau des bords du produit semi-fini (1) pour le processus de formage.

19. Procédé selon l'une quelconque des revendications précédentes,
**caractérisé en ce que**
le produit semi-fini (1) est déformé en l'abaissant dans une étendue d'eau moyennant la pression de l'eau dépendante de la profondeur.

20. Composant à relief (10),
**caractérisé en ce que**
le composant à relief (10) a été produit moyennent un procédé selon l'une quelconque des revendications précédentes.
